# EUROPEAN PATENT APPLICATION

(11) **EP 4 641 521 A1**
(43) Date of publication of application: **29.10.2025**
(21) Application number: 25168818.0
(22) Date of filing: 07.04.2025
(51) Int. Cl.: G06V 10/82, G06V 20/17, G06V 20/10, G06V 20/56

(54) **RUNWAY IDENTIFICATION SYSTEM**

(30) Priority: 26.04.2024 US 202418648215
(71) Applicant: The Boeing Company, Arlington, VA 22202 (US)
(72) Inventor: CORLEIS, Jasper, Arlington, 22202 (US); CHUNG, Chun Kit, Arlington, 22202 (US); LEE, Adrian, Arlington, 22202 (US)
(74) Representative: Bugnion S.p.A. - US1

(57) **Abstract**

A computing system for runway identification is provided. The computing system comprises one or a plurality of cameras, processing circuitry, and memory storing a runway database and executable instructions. The processing circuitry is configured to execute the instructions to collect a plurality of images related to at least an environment from the one or the plurality of cameras, execute a feature extractor to extract features for the plurality of images, generate a runway identification at least based on the extracted features by matching the extracted features with known runway features of a known runway in the runway database, and output the runway identification.

## Description

### FIELD

The present invention relates generally to the field of aircraft navigation and landing systems.

### BACKGROUND

In the domain of aviation safety and navigation, runway identification plays an important role in ensuring the accurate landing and takeoff of aircraft. Conventional systems for runway identification and verification have relied heavily on technologies such as GPS (Global Positioning System), integrated navigational databases, and instrument landing systems. Among the notable systems designed to enhance runway awareness and prevent runway incursions are the Runway Awareness and Advisory System (RAAS) developed by HONEYWELL INTERNATIONAL and the Runway Overrun Prevention System (ROPS) developed by AIRBUS.

RAAS, SmartRunway, and SmartLanding have been implemented in a variety of aircraft and operate by cross-referencing airport diagrams with GPS, Enhanced Ground Proximity Warning System (EGPWS) , and other navigational data and/or instrument landing system data. It then provides warnings to pilots if they are approaching or are in proximity to a runway. This system utilizes airport data stored in a database, coupled with GPS and other onboard sensors, to monitor the correctness of runway operations. Similarly, ROPS aims to prevent runway overrun incidents by relying on external navigational sources, primarily GPS. These systems aim to reduce the frequency of wrong surface events-a term used by the Federal Aviation Administration (FAA) to describe incidents involving aircraft landing on or taking off from an incorrect runway or taxiway. Such events are classified by the FAA as one of the top five safety issues in aviation, with some instances having the potential to be catastrophic.

Despite their advancements, both RAAS and ROPS exhibit a fundamental shortcoming: their reliance on external navigational sources like GPS. While GPS is widely used for its accuracy and reliability in navigation, it is not infallible. GPS signals may be distorted, jammed, or entirely unavailable due to various factors such as technical malfunctions, atmospheric conditions, or deliberate interference. Outages of GPS signals, although not common, can and do occur. These outages may not always be promptly detected, leading to situations where the technology upon which these systems depend is momentarily unreliable.

This inherent vulnerability in GPS-based systems means that, under certain conditions, approaching and even landing on the wrong runway occurs frequently, even within airline operations managed by seasoned pilots.

### SUMMARY

To address the above issues, a computing system for runway identification is provided, comprising at least one input sensor comprising one or a plurality of cameras, processing circuitry, and memory storing a runway database and executable instructions. The processing circuitry is configured to execute the instructions to collect a plurality of images related to at least an environment from the one or the plurality of cameras, execute a feature extractor to extract features for the plurality of images, generate a runway identification at least based on the extracted features by matching the extracted features with known runway features of a known runway in the runway database, and output the runway identification.

### BRIEF DESCRIPTION OF THE DRAWINGS

Fig. 1 is a schematic view showing a computing system for runway identification according to an example implementation.
Fig. 2 is a schematic view showing details of the inputs and outputs of the image pre-processor and feature extractor of the computing system of Fig. 1.
Fig. 3 is a schematic view showing details of the inputs and outputs of the runway identifier of the computing system of Fig. 1.
Fig. 4 is a schematic view showing an example implementation of runway data stored in the runway database of the computing system of Fig. 1.
Fig. 5 shows a flowchart for a first method according to one example implementation.
Fig. 6 shows a flowchart for a second method according to one example implementation.
Fig. 7 illustrates an aircraft in which the computing system of Fig. 1, the first method of Fig. 5, or the second method of Fig. 6 may be implemented according to the present disclosure.
Fig. 8 shows a schematic view of an example computing environment in which the computing system of Fig. 1 can be enacted.

### DETAILED DESCRIPTION

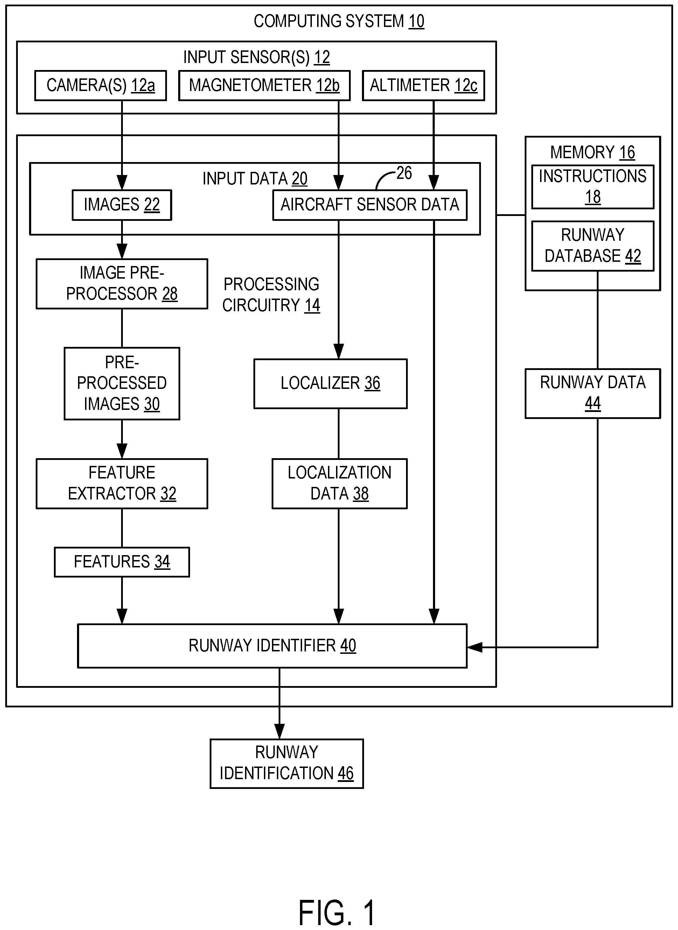

In view of the above, Fig. 1 illustrates a computing system 10 for runway identification, according to an example implementation of the present disclosure. The system 10 can include any of a number of different subsystems (each an individual system) for performing one or more functions or operations. One or more of the subsystems can be located onboard the aircraft, or remote from the aircraft such as at an operations center of the aircraft. The subsystems can be co-located or directly coupled to one another, or in some examples, various ones of the subsystems can communicate with one another across one or more computer networks. Similarly, the aircraft can communicate with one or more of the subsystems across the one or more computer networks, which during flight can be facilitated by one or more artificial satellites, ground stations and the like. Although shown as part of the computing system 10, it should be understood that any one or more of the subsystems can function or operate as a separate system without regard to any of the other subsystems. It should also be understood that the systems can include one or more additional or alternative subsystems to those shown in the figures. The computing system 10 of Fig. 1 comprises, by way of non-limiting example, at least one input sensor 12 comprising one or a plurality of cameras 12a, processing circuitry 14, and a memory 16 storing a runway database 42 and executable instructions 18 that, in response to execution by the processing circuitry 14, cause the processing circuitry 14 to collect a plurality of images 22 related to at least a portion of an environment from the one or the plurality of cameras 12a, execute a feature extractor 32 to extract features 34 for the plurality of images 22, execute a runway identifier 40 to generate a runway identification 46 at least based on the extracted features 34 by matching the extracted features 34 with known or registered runway features and runway-associated features 44 of a known runway in a runway database 42, and output the runway identification 46. The outputted runway identification 46 can be displayed or used in various practical applications in the aviation industry, including but not limited to automated landing systems, air traffic control assistance, enhanced navigation systems, unmanned aerial vehicles (UAVs) and drones, and emergency landing assistance systems.

The one or the plurality of cameras 12a can encompass not only image sensors configured to capture images 22 in the visual light spectrum, but also image sensors configured to capture images 22 in non-visual electromagnetic spectra, including thermal and infrared images 22, for example. When the cameras 12a are configured to detect electromagnetic emissions in the thermal and infrared spectra, images 22 of runways can be captured even through fog, haze, and other atmospheric obscurations. The memory 16 can also store a runway database 42 comprising data concerning known runways and known runway markings, cataloging published and geo-surveyed information relating to the geometric features of known runways and runway markings at various airports, including but not limited to precise locations of runway corners, central points along the length of the runways, and local coordinates of distinct runway markings. The runway database 42 can also include other published and geo-surveyed features of taxiways, lights, and other visually identifiable features that can assist in localization and identification. Accordingly, the runway database 42 can provide a comprehensive repository of runway characteristics to facilitate the identification of runways. The runway data 44 from the runway database 42 is used by the runway identifier 40 to find matches with known features of known runways in the runway database 42, to thereby generate an accurate runway identification 46.

The input sensor 12 includes at least one camera 12a configured to collect the plurality of images 22 of the environment. The camera 12a can be any of a number of several types of cameras capable of capturing videos or sequences of images 22, including but not limited to visual imaging devices, hyperspectral imaging devices, LIDAR imaging devices, RADAR imaging device, and the like. In various examples, the camera 12a is located onboard the aircraft in a configuration that allows the camera 12a to capture a view of the environment ahead of the aircraft in the direction of travel of the aircraft. The input sensor 12 can also include aircraft sensors 12b-c, which can include a magnetometer 12b and an altimeter 12c, which can be a barometric altimeter or a radar altimeter, for example. These aircraft sensors 12b-c are configured to collect aircraft sensor data 26. The magnetometer 12b measures the strength and direction of the magnetic field in the vicinity of the aircraft to help in accurately determining the aircraft's heading and position. The barometric altimeter collects data on the altitude of the aircraft by measuring the atmospheric pressure surrounding the aircraft. The radar altimeter uses radio waves to measure the altitude above the terrain over which the aircraft is flying.

The collected aircraft sensor data 26 can be inputted into a localizer 36, which is configured to accurately determine a location of the aircraft based on the aircraft sensor data 26. For example, the aircraft sensor data 26 can include magnetic field data from the magnetometer 12b and altitude data from the altimeter 12c, which can be analyzed by the localizer 36 to determine an elevation of the aircraft relative to sea level or the ground. Upon determining the location of the aircraft, the localizer 36 generates localization data 38 that encapsulates a current position and orientation of the aircraft. This localization data 38 can be inputted into the runway identifier 40, which takes the localization data 38 into account when determining candidate runways among the known runways of the runway database 42 when matching a known runway to the extracted features 34.

For example, when the localizer 36 determines that the aircraft is approaching an airport from a specific direction and at a certain altitude, the runway identifier 40 can use the localization data 38 to narrow down the possible known runways that the aircraft is likely to be approaching. This contextual data can be invaluable, especially in complex airport environments where multiple runways can be visible from the air, but only one runway among them matches the current trajectory and altitude profile of the aircraft. The collected images 22 can be pre-processed by an image pre-processor 28 to generate pre-processed images 30, which are subsequently inputted into the feature extractor 32. The pre-processing performed by the image pre-processor 28 can include frame reduction and cropping, for example.

The collected images 22 and the aircraft sensor data 26 belong to input data 20.

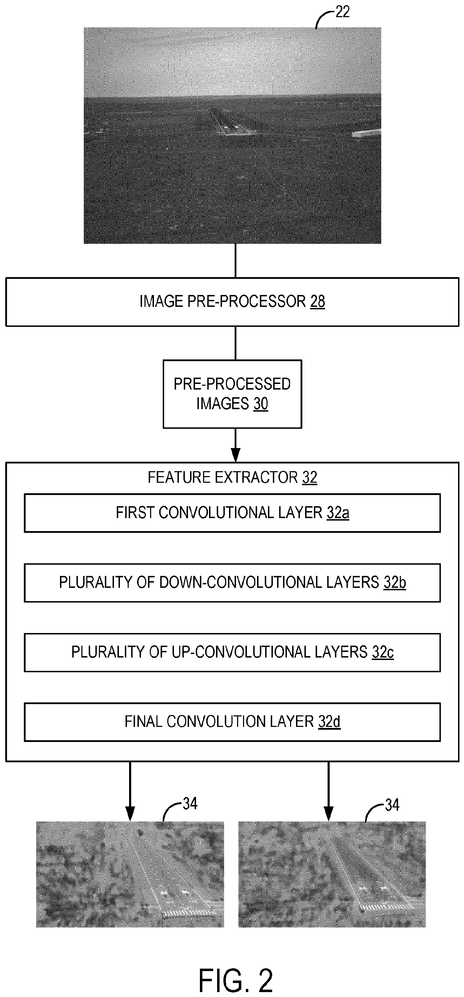

Turning to Fig. 2, an example input image 22 is depicted being pre-processed by the image pre-processor 28 to generate pre-processed images 30. The feature extractor 32 extracts individual features 34 from the pre-processed images 30. The extracted features 34 can include runway instances, runway features and/or airport features. The feature extractor 32 can be a machine perception system, exemplified by a convolutional neural network (CNN), trained on labeled training data sets that include a variety of images captured from the viewpoint of the aircraft. In the labeled training data sets, video frames or images with airport runways are labeled as runway. Alternatively, the feature extractor 32 can be configured as vision transformers in other possible implementations of machine vision. The labeling can be done on a pixel-by-pixel basis in at least a portion of the pre-processed images 30. The extracted features 34 can be generated in the form of interest points of runways. For example, heat maps or other equivalent methods can be used for estimating locations of interest points of runways based on feature localization and probability estimations at geographic locations. The geographical distributions of these location estimations can be fitted onto the heat maps for each of the interest points.

When the feature extractor 32 is configured with a CNN architecture, the pre-processed images 30 can be passed through a first convolutional layer 32a. For example, the first convolutional layer 32a can have a 3x3 filter (or kernel), expanding the depth from 1 (assuming grayscale images) to 64 feature maps. A ReLU (Rectified Linear Unit) activation function can be applied to the first convolutional layer 32a, which introduces non-linearity. A max pooling operation with a 2x2 filter can be applied, reducing the spatial dimensions (width and height) of the feature maps by half.

The process of applying convolutional layers with ReLU activation and max pooling can be repeated several times via a plurality of down-convolutional layers 32b. Each time, the number of feature maps can be doubled, going from 64 to 128, then to 256, and so on, up to 1024. This incremental increase allows the feature extractor 32 to progressively learn more complex and abstract features at each layer.

After reaching the deepest layer with 1024 feature maps, the feature extractor 32 can begin to up sample the feature maps through a plurality of up-convolutional layers 32c using up-convolution (or transpose convolution) operations, thereby decreasing the number of feature maps in each step (from 1024 back down to 512, 256, 128, and finally 64). This part of the feature extractor 32 reconstructs the spatial dimensions of the input image from the compressed, high-level features learned by the deep layers.

The final convolution layer 32d can apply a convolution that reduces the depth from 64 feature maps to just 2. This results in the extraction of features 34, which can classify each pixel in at least a portion of the pre-processed images 30 as runway or not runway. Thus, the feature extractor 32 can systematically apply a series of convolutional, activation, and pooling layers to extract increasingly complex features 34 from the pre-processed images 30, then gradually reconstruct the spatial dimensions while refining these features 34.

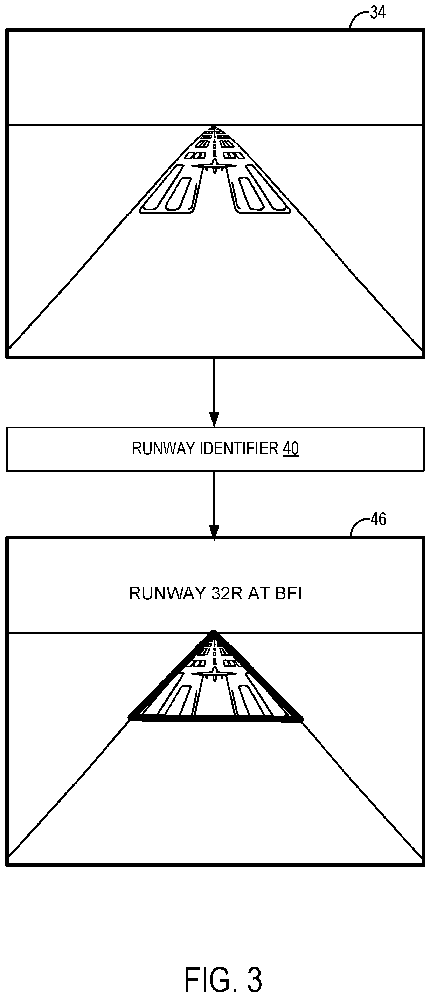

Turning to Fig. 3, features 34 generated by the feature extractor 32 as set forth in Fig. 2 show geometric outlines of a runway, according to an example implementation. The runway identifier 40 then performs an analysis to match the extracted features 34 to features in the runway database 42, so that the extracted features 34 are matched to a known runway and a runway identification 46 is generated to indicate the specific matching runway. In this example, the runway identification 46 generated by the runway identifier 40 is "RUNWAY 32R AT BFI", or Runway 32R of Boeing Field International Airport.

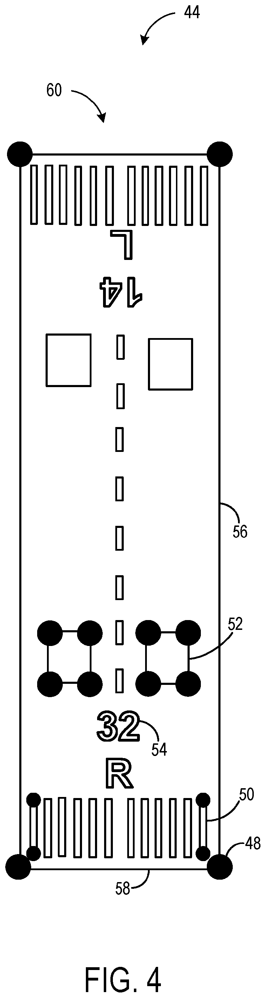

Turning to Fig. 4, the runway data 44 from the runway database 42, as set forth in Fig. 2, used to identify runways by the runway identifier 40, also as set forth in Fig. 2, can be masks 60 that are produced by assigning an object class for a specific runway or runway marking for each pixel in the image. Each mask 60 can include a segment of pixels assigned to an object class for the runway or the runway marking. The mask 60 can include interest points 48 or features that correspond to points or features on the runway such as corners of the runway, points on one or more of the runway markings (threshold markings 50, aiming point markings 52, designation markings 54, side stripes 56, and thresholds 58, for example). The runway identifier 40 can match interest points on the runway or the runway marking in extracted features 34, as set forth in Fig. 2, to corresponding interest points 48 on the runway or the runway marking in the mask 60 or runway data 44 that have known runway-framed local coordinates. The runway identifier 40 generates a runway identification 46 based on the mask 60 or runway data 44 that matches the extracted features 34. In this example, the matching mask 60 corresponds to Runway 32R of Boeing Field International Airport.

Following the initial identification of runways using masks 60 as described in relation to Fig. 4, a post inference feature analysis can be employed on the extracted features 34 to refine the identification and mapping of interest points 48. The generation of the runway identification 46 by the runway identifier 40 can be further refined through the application of RANSAC (Random Sample Consensus) reprojection, missing label validation, and polygonal validation, for example.

RANSAC reprojection can be utilized to validate and refine the alignment of interest points in extracted features 34 with interest points 48 in the masks 60 or runway data 44. This method works by iteratively selecting a random subset of the extracted features 34 and attempting to model the runway's geometry to the interest points 48 in the runway data 44 based on these features 34. This can be particularly effective in mitigating the impact of outliers on the identification process, thereby ensuring that the extracted features 34 correspond accurately to actual physical features on the runway. Furthermore, missing label validation can be another technique employed in this context. This technique involves generating interest points 48 that would be expected to be present on the runway or runway markings but were not identified in the initial extraction process. By analyzing the spatial distribution and expected patterns of runway features 34, the likely locations of these missing interest points 48 can be inferred, thereby enhancing the completeness and accuracy of the runway identification. Accordingly, a runway identification 46 can be generated even when specific runway markings or other features are not visible in an image, which can enable the runway identifier 40 to work in environments with relatively low visibility.

Further, polygonal validation can be used as a method to identify interest points 48 based on geometric patterns observed on the extracted runway features 34. For instance, when square patterns are detected on the runway surface, polygonal validation can be employed to identify interest points 48 at each corner of a polygon, such as a square. This method relies on the geometric properties of the patterns observed, allowing for the accurate mapping of interest points 48 based on the predefined shapes that these patterns form.

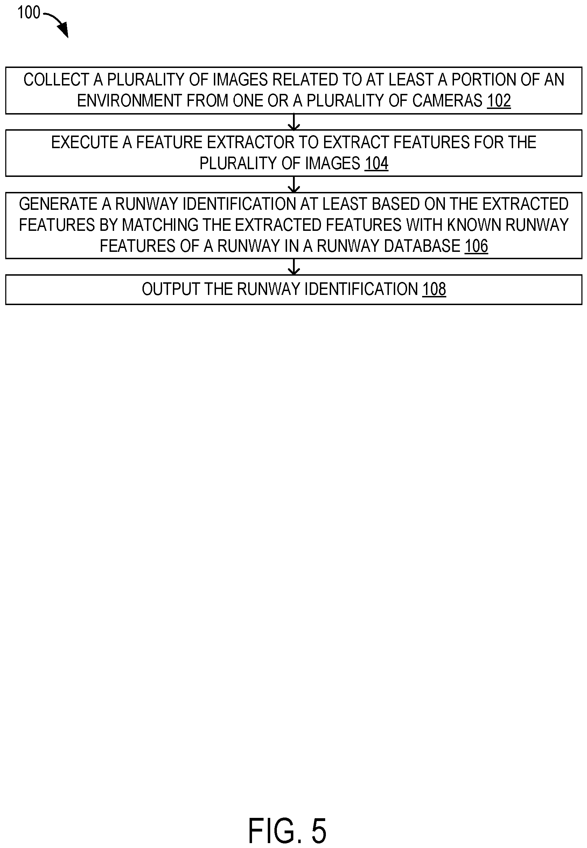

Turning to Fig. 5, a flowchart is illustrated of a first computerized method 100 for generating a runway identification based on image data. The following description of the first computerized method 100 is provided with reference to the software and hardware components described above and shown in Figs. 1-4. It will be appreciated that first computerized method 100 also can be performed in other contexts using other suitable hardware and software components.

At 102, a plurality of images related to at least a portion of an environment is collected from one or a plurality of cameras. At 104, a feature extractor is executed to extract features for the plurality of images. At 106, a runway identification is generated at least based on the extracted features by matching the extracted features with known runway features of a known runway in a runway database. At 108, the runway identification is outputted.

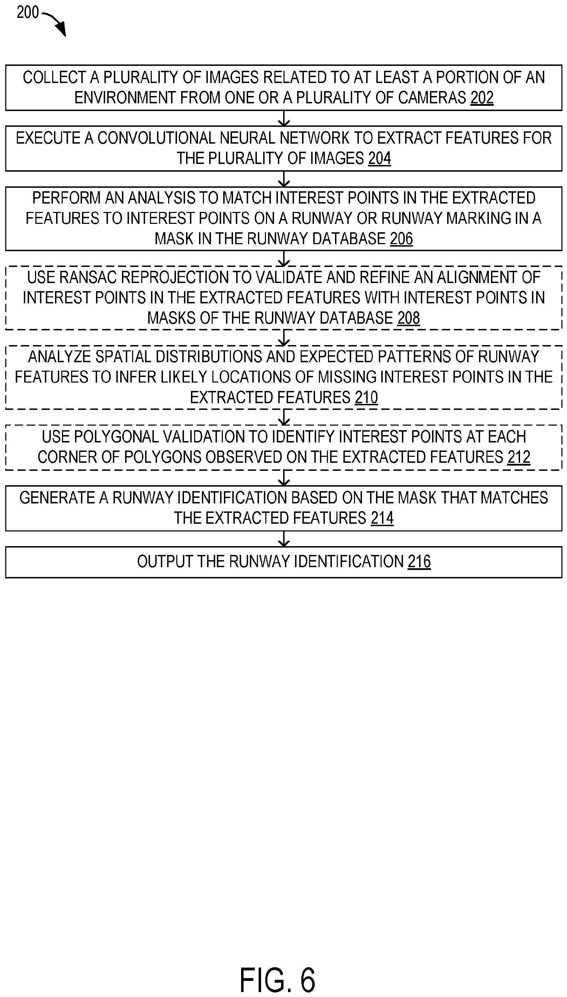

Turning to Fig. 6, a flowchart is illustrated of a second computerized method 200 for generating a runway identification based on input data. The following description of the second computerized method 200 is provided with reference to the software and hardware components described above and shown in Figs. 1-4. It will be appreciated that second computerized method 200 also can be performed in other contexts using other suitable hardware and software components.

At 202, a plurality of images related to at least a portion of an environment is collected from one or a plurality of cameras. At 204, a convolutional neural network is executed to extract features for the plurality of images. At 206, an analysis is performed to match interest points in the extracted features to interest points on a runway or runway marking in a mask in a runway database. At 208, RANSAC reprojection can be used to validate and refine an alignment of interest points in the extracted features with interest points in the masks. At 210, spatial distributions and expected patterns of runway features can be analyzed to infer likely locations of missing interest points in the extracted features. At 212, polygonal validation can be used to identify interest points at each corner of polygons observed on the extracted features. At 214, a runway identification is generated based on the mask that matches the extracted features. At 216, the runway identification is outputted.

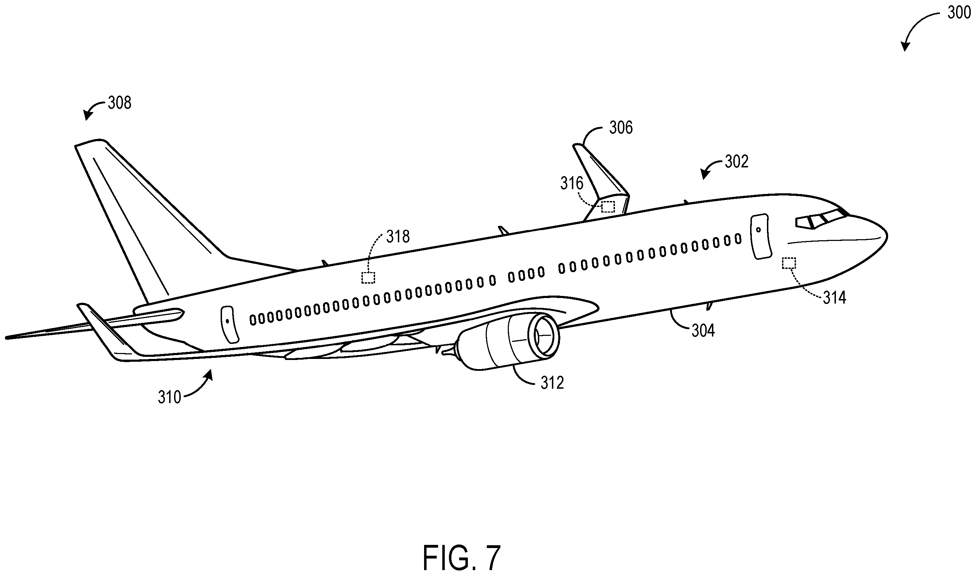

Example implementations of the present disclosure are directed to aircraft operation. Fig. 7 illustrates one type of aircraft 300 that can benefit from example implementations of the present disclosure. As shown, the aircraft includes an airframe 302 with a fuselage 304, wings 306 and tail 308. The aircraft also includes a plurality of high-level systems 310 such as a propulsion system. In the particular example shown in Fig. 7, the propulsion system includes two wing-mounted engines 312. In other embodiments, the propulsion system can include other arrangements, for example, engines carried by other portions of the aircraft including the fuselage and/or the tail. The high-level systems can also include an electrical system 314, hydraulic system 316 and/or environmental system 318. Any number of other systems can be included.

The above-described system and methods are configured to extract runway features from image data and match these features to existing features of known runways in a runway database to generate a runway identification, thereby offering a robust solution to the shortcomings inherent in conventional systems that rely heavily on GPS and other external navigational aids. By identifying runways in image data, the situational awareness of pilots may be enhanced, and the risk of wrong surface events may be reduced significantly.

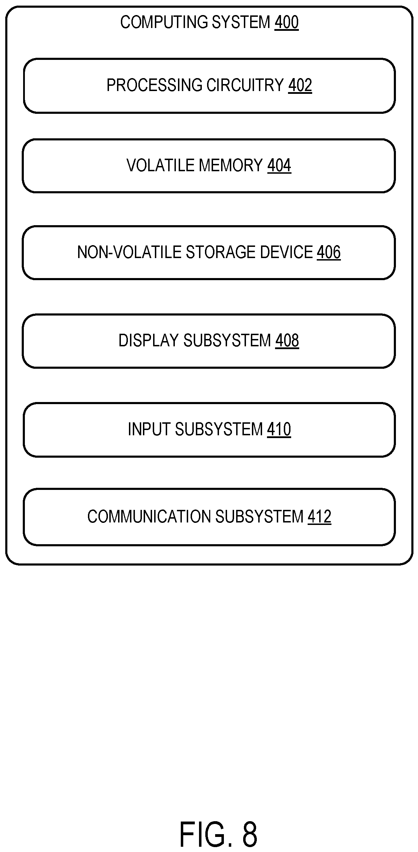

Fig. 8 schematically shows a non-limiting embodiment of a computing system 400 that can enact one or more of the methods and processes described above. Computing system 400 is shown in simplified form. Computing system 400 can embody the computing system 10 described above and illustrated in Figs. 1-4. Components of computing system 400 can be included in one or more personal computers, server computers, tablet computers, home-entertainment computers, network computing devices, video game devices, mobile computing devices, mobile communication devices (e.g., smartphone), and/or other computing devices, and wearable computing devices such as smart wristwatches and head mounted augmented reality devices.

Computing system 400 includes processing circuitry 402, volatile memory 404, and a non-volatile storage device 406. Computing system 400 can optionally include a display subsystem 408, input subsystem 410, communication subsystem 412, and/or other components.

Processing circuitry typically includes one or more logic processors, which are physical devices configured to execute instructions. For example, the logic processors can be configured to execute instructions that are part of one or more applications, programs, routines, libraries, objects, components, data structures, or other logical constructs. Such instructions can be implemented to perform a task, implement a data type, transform the state of one or more components, achieve a technical effect, or otherwise arrive at a desired result.

The logic processor can include one or more physical processors configured to execute software instructions. Additionally or alternatively, the logic processor can include one or more hardware logic circuits or firmware devices configured to execute hardware-implemented logic or firmware instructions. Processors of the processing circuitry 402 can be single-core or multi-core, and the instructions executed thereon can be configured for sequential, parallel, and/or distributed processing. Individual components of the processing circuitry optionally can be distributed among two or more separate devices, which can be remotely located and/or configured for coordinated processing. For example, aspects of the computing system disclosed herein can be virtualized and executed by remotely accessible, networked computing devices configured in a cloud-computing configuration. In such a case, these virtualized aspects are run on different physical logic processors of various different machines, it will be understood. These different physical logic processors of the different machines will be understood to be collectively encompassed by processing circuitry 402.

Non-volatile storage device 406 includes one or more physical devices configured to hold instructions executable by the processing circuitry to implement the methods and processes described herein. When such methods and processes are implemented, the state of non-volatile storage device 406 can be transformed-e.g., to hold different data. Non-volatile storage device 406 can include physical devices that are removable and/or built in. Non-volatile storage device 406 can include optical memory, semiconductor memory, and/or magnetic memory, or other mass storage device technology. Non-volatile storage device 406 can include nonvolatile, dynamic, static, read/write, read-only, sequential-access, location-addressable, file-addressable, and/or content-addressable devices. It will be appreciated that non-volatile storage device 406 is configured to hold instructions even when power is cut to the non-volatile storage device 406.

Volatile memory 404 can include physical devices that include random access memory. Volatile memory 404 is typically utilized by processing circuitry 402 to temporarily store information during processing of software instructions. It will be appreciated that volatile memory 404 typically does not continue to store instructions when power is cut to the volatile memory 404.

Aspects of processing circuitry 402, volatile memory 404, and non-volatile storage device 406 can be integrated together into one or more hardware-logic components. Such hardware-logic components can include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

The terms "module," "program," and "engine" can be used to describe an aspect of computing system 400 typically implemented in software by a processor to perform a particular function using portions of volatile memory, which function involves transformative processing that specially configures the processor to perform the function. Thus, a module, program, or engine can be instantiated via processing circuitry 402 executing instructions held by non-volatile storage device 406, using portions of volatile memory 404. It will be understood that different modules, programs, and/or engines can be instantiated from the same application, service, code block, object, library, routine, API, function, etc. Likewise, the same module, program, and/or engine can be instantiated by different applications, services, code blocks, objects, routines, APIs, functions, etc. The terms "module," "program," and "engine" can encompass individual or groups of executable files, data files, libraries, drivers, scripts, database records, etc.

When included, display subsystem 408 can be used to present a visual representation of data held by non-volatile storage device 406. The visual representation can take the form of a graphical user interface (GUI). As the herein described methods and processes change the data held by the non-volatile storage device, and thus transform the state of the non-volatile storage device, the state of display subsystem 408 can likewise be transformed to visually represent changes in the underlying data. Display subsystem 408 can include one or more display devices utilizing virtually any type of technology. Such display devices can be combined with processing circuitry 402, volatile memory 404, and/or non-volatile storage device 406 in a shared enclosure, or such display devices can be peripheral display devices.

When included, input subsystem 410 can comprise or interface with one or more user-input devices such as a keyboard, mouse, touch screen, camera, or microphone. When included, communication subsystem 412 can be configured to communicatively couple various computing devices described herein with each other, and with other devices. Communication subsystem 412 can include wired and/or wireless communication devices compatible with one or more different communication protocols. As non-limiting examples, the communication subsystem can be configured for communication via a wired or wireless local- or wide-area network, broadband cellular network, etc. In some embodiments, the communication subsystem can allow computing system 400 to send and/or receive messages to and/or from other devices via a network such as the Internet.

Further, the disclosure comprises configurations according to the following clauses.
Clause 1. A computing system comprising: at least one input sensor comprising one or a plurality of cameras; processing circuitry; and a memory storing a runway database and executable instructions that, in response to execution by the processing circuitry, cause the processing circuitry to: collect a plurality of images related to at least an environment from the one or the plurality of cameras; execute a feature extractor to extract features for the plurality of images; generate a runway identification at least based on the extracted features by matching the extracted features with known runway and runway-associated features of a known runway in the runway database; and output the runway identification.
Clause 2. The computing system of clause 1, wherein the feature extractor is a machine perception system.
Clause 3. The computing system of clause 2, wherein the machine perception system is a vision transformer.
Clause 4. The computing system of clause 2, wherein the machine perception system is a convolutional neural network.
Clause 5. The computing system of clause 4, wherein a plurality of down-convolutional layers with ReLU activation and max pooling are applied to the plurality of images, followed by applying a plurality of up-convolutional layers to the plurality of images. Clause 6. The computing system of any of clauses 1 to 5, wherein the extracted features are estimated locations of interest points of runways based on probability estimations at geographic locations.
Clause 7. The computing system of clause 6, wherein the runway identification is generated by matching interest points or features in the extracted features with interest points or features of the known runway in the runway database.
Clause 8. The computing system of clause 7, wherein the interest points or features in the runway database correspond to at least one of threshold markings, aiming point markings, designation markings, side stripes, or thresholds of registered runways or runway-associated features.
Clause 9. The computing system of any of clauses 1 to 8, wherein the feature extractor is executed to classify each pixel in at least a portion of the plurality of images as runway or not runway.
Clause 10. The computing system of any of clauses 1 to 9, wherein the at least one input sensor comprises at least an altimeter or a magnetometer; sensor data from the at least the altimeter or the magnetometer is used to generate localization data; and the localization data is taken into account when generating the runway identification.
Clause 11. A computing method comprising: collecting a plurality of images related to at least an environment from one or a plurality of cameras; executing a feature extractor to extract features for the plurality of images; generating a runway identification at least based on the extracted features by matching the extracted features with known runway features of a known runway in a runway database; and outputting the runway identification.
Clause 12. The computing method of clause 11, wherein the feature extractor is a machine perception system.
Clause 13. The computing method of clause 12, wherein the feature extractor is a vision transformer.
Clause 14. The computing method of clause 12, wherein the feature extractor is a convolutional neural network.
Clause 15. The computing method of clause 14, wherein a plurality of down-convolutional layers with ReLU activation and max pooling are applied to the plurality of images, followed by applying a plurality of up-convolutional layers to the plurality of images.
Clause 16. The computing method of any of clauses 11 to 15, wherein the extracted features are estimated locations of interest points of runways based on probability estimations at geographic locations.
Clause 17. The computing method of clause 16, wherein the runway identification is generated by matching interest points or features in the extracted features with interest points or features of the known runway in the runway database.
Clause 18. The computing method of clause 17, wherein the interest points or features in the runway database correspond to at least one of threshold markings, aiming point markings, designation markings, side stripes, or thresholds of registered runways or runway-associated features.
Clause 19. The computing method of any of clauses 11 to 18, wherein the feature extractor is executed to classify each pixel in at least a portion of the plurality of images as runway or not runway.
Clause 20. A computing system comprising: at least one input sensor comprising one or a plurality of cameras; processing circuitry; and a memory storing a runway database and executable instructions that, in response to execution by the processing circuitry cause the processing circuitry to: collect a plurality of images related to at least a portion of an environment from the one or the plurality of cameras; execute a convolutional neural network to extract features for the plurality of images; perform an analysis to match interest points in the extracted features to interest points on a runway or runway marking in a mask in the runway database; analyze spatial distributions and expected patterns of runway features to infer likely locations of missing interest points in the extracted features; generate a runway identification based on the mask that matches the extracted features; and output the runway identification.

"And/or" as used herein is defined as the inclusive or V, as specified by the following truth table:

| A | B | A V B |
|---|---|---|
| True | True | True |
| True | False | True |
| False | True | True |
| False | False | False |

It will be understood that the configurations and/or approaches described herein are exemplary in nature, and that these specific embodiments or examples are not to be considered in a limiting sense, because numerous variations are possible. The specific routines or methods described herein can represent one or more of any number of processing strategies. As such, various acts illustrated and/or described can be performed in the sequence illustrated and/or described, in other sequences, in parallel, or omitted. Likewise, the order of the above-described processes can be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A computing system (10) comprising:
at least one input sensor (12) comprising one or a plurality of cameras (12a);
processing circuitry (14); and
a memory (16) configured to store a runway database (42) and executable instructions (18) that, in response to execution by the processing circuitry (14), cause the processing circuitry (14) to:
collect a plurality of images (22) related to at least an environment from the one or the plurality of cameras (12a);
execute a feature extractor (32) to extract features (34) for the plurality of images (22);
generate a runway identification (46) at least based on the extracted features (34) by matching the extracted features (34) with known runway and runway-associated features (44) of a known runway in the runway database (42); and
output the runway identification (46).

2. The computing system (10) of claim 1, wherein the feature extractor (32) is a machine perception system.

3. The computing system (10) of claim 2 or 3, wherein the machine perception system is a vision transformer or a convolutional neural network.

4. The computing system (10) of claim 3, wherein a plurality of down-convolutional layers (32b) with ReLU activation and max pooling are applied to the plurality of images (22), followed by applying a plurality of up-convolutional layers (32c) to the plurality of images (22).

5. The computing system (10) of any one of the preceding claims, wherein the extracted features (34) are estimated locations of interest points (48) of runways based on probability estimations at geographic locations.

6. The computing system (10) of claim 5, wherein the runway identification (46) is generated by matching the interest points (48) or features in the extracted features (34) with the interest points (48) or features of the known runway in the runway database (42).

7. The computing system (10) of claim 5 or 6, wherein the interest points (48) or features in the runway database (42) correspond to at least one of threshold markings (50), aiming point markings (52), designation markings (54), side stripes (56), or thresholds (58) of registered runways or runway-associated features (44).

8. The computing system (10) of any one the preceding claims, wherein the feature extractor (32) is executed to classify each pixel in at least a portion of the plurality of images (22) as runway or not runway.

9. The computing system (10) of any one of the preceding claims, wherein
the at least one input sensor (12) comprises at least an altimeter (12c) or a magnetometer (12b);
sensor data from the at least the altimeter (12c) or the magnetometer (12b) is used to generate localization data (38); and
the localization data (38) is taken into account when generating the runway identification (46).

10. A computing-implemented method (100; 200) comprising:
collecting a plurality of images (22) related to at least an environment from one or a plurality of cameras (102; 202);
executing a feature extractor (32) to extract features (34) for the plurality of images (104; 204);
generating a runway identification 46) at least based on the extracted features (34) by matching the extracted features (34) with known runway features (34) of a known runway in a runway database (106; 214); and
outputting the runway identification (108; 216).

11. The computing method (100) of claim 10, wherein the feature extractor (32) is a machine perception system, said machine perception system being a vision transformer or a convolutional neural network.

12. The computing method (100) of claim 11, wherein a plurality of down-convolutional layers (32b) with ReLU activation and max pooling are applied to the plurality of images (22), followed by applying a plurality of up-convolutional layers (32c) to the plurality of images (22).

13. The computing method (100) of any one of claims 10 to 12, wherein the extracted features (34) are estimated locations of interest points (48) of runways based on probability estimations at geographic locations.

14. The computing method (100) of claim 13, wherein the runway identification (46) is generated by matching the interest points (48) or features in the extracted features (34) with the interest points (48) or features of the known runway in the runway database (42).

15. The computing method (100) of claim 13 or 14, wherein the interest points (48) or features in the runway database (42) correspond to at least one of threshold markings (50), aiming point markings (52), designation markings (54), side stripes (56), or thresholds (58) of registered runways or runway-associated features (44).
